# EUROPÄISCHE PATENTANMELDUNG

(11) **EP 1 835 194 A2**
(43) Veröffentlichungstag der Anmeldung: **19.09.2007**
(21) Anmeldenummer: 07103121.5
(22) Anmeldetag: 27.02.2007
(51) Int. Cl.: F16D 25/12

(54) **Verfahren zur Kühlung eines Reibschaltelementes eines Getriebes**

(30) Priorität: 15.03.2006 DE 102006011801
(71) Anmelder: ZF FRIEDRICHSHAFEN Aktiengesellschaft, 88038 Friedrichshafen (DE)
(72) Erfinder: Gierling, Armin, 88085 Langenargen (DE); Popp, Christian, 88079 Kressbronn (DE); Steinhauser, Klaus, 88079 Kressbronn (DE); Schiele, Peter, 88079 Kressbronn (DE)

(57) **Zusammenfassung**

Es wird ein Verfahren zur Kühlung eines Reibschaltelementes eines Getriebes vorgeschlagen, im Rahmen dessen eine variable, eine konstante oder die maximale Kühlölmenge dem Reibschaltelement zeitgesteuert, d.h. innerhalb einer Nachkühlphase, zugeführt wird.

## Beschreibung

Die vorliegende Erfindung betrifft ein Verfahren zur Kühlung eines Reibschaltelementes eines Getriebes, gemäß dem Oberbegriff des Patentanspruchs 1.

Bei Automatgetrieben, die einen Wandler und eine Diesel-Anfahrunterstützung (DAFU) oder eine Launch-Control Funktion umfassen, werden die Kupplungen bzw, die Reibschaltelemente sehr stark belastet. Dies ist auch bei Doppelkupplungsgetrieben, automatisierten Schaltgetrieben und Automatgetrieben der Fall, bei denen der Anfahrvorgang mittels einer in der Regel als Reibschaltelement ausgebildeten Anfahrkupplung durchgeführt wird.

Aus dem Stand der Technik ist bekannt, nasse Reibkupplungen mit Kühlöl zu versorgen. Die Kühlölversorgung kann über hydraulische Ventile konstant gehalten werden, des weiteren ist es möglich, die Kühlölversorgung über eine entsprechende hydraulische Ansteuerung variabel zu gestalten.

Aus der DE 10 2004 041 160 A1 ist ein Verfahren zum Kühlen einer Reibvorrichtung bzw. eines Reibelementes bekannt, im Rahmen dessen in Abhängigkeit eines Temperaturmodells des Reibelements die aktuelle Reibelementtemperatur berechnet wird, wobei die Kühlölmenge in Abhängigkeit von der berechneten Reibelementtemperatur gesteuert wird, um das Reibelement vor Schädigung bzw. Überlast zu schützen.

Dieses bekannte Verfahren ist in nachteiliger Weise sehr aufwändig, da die entsprechenden für das verwendete Temperaturmodell benötigten physikalischen Daten (z.B. Wärmeeintrag, Wärmeabfuhr, Wärmeaufnahmevermögen in Abhängigkeit des Kühlölstromes) anhand von aufwändigen Messungen ermittelt werden müssen. Zudem werden für die Auswertung dieser Daten hohe Rechnerressourcen benötigt.

Der vorliegenden Erfindung liegt die Aufgabe zugrunde, ein Verfahren zur Kühlung eines Reibschaltelementes eines Getriebes anzugeben, welches die genannten Nachteile der aus dem Stand der Technik bekannten Verfahren vermeidet und eine effektive Kühlung des Reibschaltelementes ermöglicht. Insbesondere sollen die zur Durchführung des Verfahrens benötigten Rechnerressourcen sowie der Messaufwand reduziert werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Kühlung eines Reibschaltelementes eines Getriebes vorgeschlagen, im Rahmen dessen eine variable, eine konstante oder die maximale Kühlölmenge dem Reibschaltelement zeitgesteuert (d.h. innerhalb einer Nachkühlphase) zugeführt wird.

Gemäß einer vorteilhaften Variante des erfindungsgemäßen Verfahrens wird die Zeitdauer der Kühlung bzw. der Nachkühlphase in Abhängigkeit der vorhandenen/möglichen variablen Kühlölmenge"
- der Einkuppeldifferenzdrehzahl (d.h. der Differenzdrehzahl des Reibschaltelements zu Beginn der Schaltung),
- und/oder der Zeitdauer der Schaltung (d.h. Zeit von der Einkuppeldrehzahl bis zur Zieldrehzahl), -und/oder der Sumpftemperatur oder der Temperatur einer weiteren Temperaturmessstelle, die über einen Temperatursensor ermittelt wird,
- und/oder des Kupplungsmomentes,
- und/oder der absoluten Kupplungseingangs- und/oder Ausgangsdrehzahl,
- und/oder der aktuellen Kupplungsbelastung,
- und/oder der aktuellen Getriebeeingangs- oder Ausgangsdrehzahl oder Differenzdrehzahl, -und/oder der Schmier-Kühlölpumpendrehzahl, -und/oder der Anzahl der vorangegangenen Anfahrten bzw. erhöhten Kupplungsbelastungen in der Nachkühlphase (Nachkühlzeit) bzw. innerhalb eines vorgegebenen Zeitintervalls,
- und/oder gang- bzw, schaltungsartabhängig
ermittelt.

Bei dem Kupplungsmoment kann es sich um das mittlere Kupplungsmoment oder um das in der Schaltung vorkommende höchste Kupplungsmoment handeln.

Gemäß der Erfindung werden zur Durchführung des Verfahrens entsprechende Kennlinien, Kennfelder, Festwerte, Offsets und/oder Faktoren mittels eines Berechnungsalgorithmus miteinander verknüpft.

Ferner ist erfindungsgemäß vorgesehen, dass nach Erreichen der Zeitdauer der Kühlung (Ablauf der Nachkühlphase) der Kühlolstrom auf das Minimum zurückgefahren wird.

In vorteilhafter Weise kann bei einer erneuten Belastung der Reibkupplung (z.B. erneutes Anfahren) innerhalb der zeitgesteuerten Nachkühlphase eine entsprechende Momentenbegrenzung durchgeführt werden, um die Reibkupplung nicht zu schädigen. Hierbei kann die Momentenbegrenzung gestaffelt, anhand zeitlich aufeinander folgender Anfahrten bzw. Belastungen durchgeführt werden.

Wenn beispielsweise eine erneute Anfahrt bzw. Belastung der Reibkupplung innerhalb der zeitgesteuerten Nachkühlphase erfolgt, wird ein Zähler hoch gezählt, wobei der Zählerwert als Wert für die Berechnung der folgenden Zeitdauer der Nachkühlphase herangezogen wird und/oder zur gestaffelten Momentenreduzierung dient. Gemäß der Erfindung kann die Größe des Zählerwertes anhand der Restzeitdauer der Nachkühlphase gewählt werden.

Durch die erfindungsgemäße Konzeption wird ein Verfahren zur Kühlung eines Reibschaltelementes zur Verfügung gestellt, welches bei Reduzierung der Rechnerressourcen, des Messaufwandes und der Systemkomplexität eine effektive Kühlung ermöglicht

## Patentansprüche

1. Verfahren zur Kühlung eines Reibschaltelementes eines Getriebes, **dadurch gekennzeichnet, dass** eine variable, eine konstante oder die maximale Kühlölmenge dem Reibschaltelement zeitgesteuert, d.h. innerhalb einer Nachkühlphase, zugeführt wird.

2. Verfahren zur Kühlung eines Reibschaltelementes eines Getriebes nach Anspruch 1, **dadurch gekennzeichnet, dass** die Zeitdauer der Kühlung bzw. der Nachkühlphase in Abhängigkeit der vorhandenen/möglichen variablen Kühlölmenge,
- der Einkuppeldifferenzdrehzahl (d.h. der Differenzdrehzahl des Reibschaltelements zu Beginn der Schaltung),
- und/oder der Zeitdauer der Schaltung (d.h. Zeit von der Einkuppeldrehzahl bis zur Zieldrehzahl),
- und/oder der Sumpftemperatur oder der Temperatur einer weiteren Temperaturmessstelle, die über einen Temperatursensor ermittelt wird,
- und/oder des Kupplungsmomentes,
- und/oder der absoluten Kupplungseingangs- und/oder Ausgangsdrehzahl,
- und/oder der aktuellen Kupplungsbelastung,
- und/oder der aktuellen Getriebeeingangs- oder Ausgangsdrehzahl oder Differenzdrehzahl,
- und/oder der Schmier-Kühlölpumpendrehzahl,
- und/oder der Anzahl der vorangegangenen Anfahrten bzw, erhöhten Kupplungsbelastungen in der Nachkühlphase bzw. innerhalb eines vorgegebenen Zeitintervalls,
- und/oder gang- bzw. schaltungsartabhängig, ermittelt wird.

3. Verfahren zur Kühlung eines Reibschaltelementes eines Getriebes nach Anspruch 2, **dadurch gekennzeichnet, dass** als Kupplungsmoment das mittlere Kupplungsmoment oder das in der Schaltung vorkommende höchste Kupplungsmoment herangezogen wird.

4. Verfahren zur Kühlung eines Reibschaltelementes eines Getriebes nach einem der vorangehenden Ansprüche, **dadurch gekennzeichnet, dass** zur Durchführung des Verfahrens entsprechende Kennlinien, Kennfelder, Festwerte, Offsets, und/oder Faktoren mittels eines Berechnungsalgorithmus miteinander verknüpft werden.

5. Verfahren zur Kühlung eines Reibschaltelementes eines Getriebes nach einem der vorangehenden Anspruche, **dadurch gekennzeichnet, dass** nach Erreichen der Zeitdauer der Kühlung bzw. des Ablaufs der Nachkühlphase der Kühlölstrom auf das Minimum zurückgefahren wird.

6. Verfahren zur Kühlung eines Reibschaltelementes eines Getriebes nach einem der vorangehenden Ansprüche, **dadurch gekennzeichnet, dass** bei einer erneuten Belastung der Reibkupplung innerhalb der zeitgesteuerten Nachkültphase eine entsprechende Momentenbegrenzung durchgeführt wird, um die Reibkupplung nicht zu schädigen.

7. Verfahren zur Kühlung eines Reibschaltelementes eines Getriebes nach Anspruch 6, **dadurch gekennzeichnet, dass** die Momentenbegrenzung anhand zeitlich aufeinander folgender Anfahrten bzw. Belastungen gestaffelt durchgeführt wird.

8. Verfahren zur Kühlung eines Reibschaltelementes eines Getriebes nach Anspruch 7, **dadurch gekennzeichnet, dass**, wenn eine erneute Anfahrt bzw. Belastung der Reibkupplung innerhalb der zeitgesteuerten Nachkühlphase erfolgt, ein Zähler hoch gezählt wird, wobei der Zählerwert als Wert für die Berechnung der folgenden Zeitdauer der Nachkühlphase herangezogen wird und/oder zur gestaffelten Momentenreduzierung dient.

9. Verfahren zur Kühlung eines Reibschaltelementes eines Getriebes nach Anspruch 8, **dadurch gekennzeichnet, dass** die Größe des Zählerwertes anhand der Restzeitdauer der Nachkühlphase gewählt wird.
